# EUROPEAN PATENT APPLICATION

(11) **EP 2 671 636 A1**
(43) Date of publication of application: **11.12.2013**
(21) Application number: 12171038.8
(22) Date of filing: 06.06.2012
(51) Int. Cl.: B01J 19/24, B01J 12/00, C01B 3/02, F28D 7/16

(54) **Pressure vessel with replaceable tubes**

(71) Applicant: Ammonia Casale S.A., 6900 Lugano-Besso (CH)
(72) Inventor: Rizzi, Enrico, 22070 Casnate con Bernate (CO) (IT); Germani, Gabriele, 6900 Lugano (CH)
(74) Representative: Zardi, Marco

(57) **Abstract**

A vessel suitable for use as a tube heat exchanger or reformer, comprising a shell (2), a first tube sheet (4) and a second tube sheet (5) which are made of metal and preferably of steel, and a plurality of tubes (3) arranged inside the vessel to form a tube bundle between the first tube sheet and the second tube sheet; each of said tubes has a first end and a second end sharing a simply supported link (12, 13) with the first tube sheet or second tube sheet, respectively, in such a way that the tubes are easily extractable from the vessel; said tubes (3) are made preferably of a ceramic material and can be coated or impregnated with a catalyst.

## Description

### Field of application

The invention relates to a pressure vessel including a tube bundle, suitable for use as heat exchanger or reformer, for example. The invention is applicable preferably but not exclusively to unfired reformers such as gas heated reformers.

### Prior art

Reforming is a well known technique for converting a hydrocarbon source into a useful product such as hydrogen or a make-up synthesis gas for a particular use, e.g. for the synthesis of ammonia. Steam reforming for example is a common way to convert methane to a synthesis gas containing carbon monoxide (CO) and hydrogen (H₂).

A known embodiment of a reformer, referred to as tube reformer, comprises a vessel and a plurality of externally-heated metal tubes filled with a suitable catalyst. Usually the tubes are straight tubes extending between two tube sheets. The process of reforming takes place in the tube side, where the gas to be reformed is contacted with the catalyst. A heating medium such as hot gas is admitted in the shell side of the vessel, to heat the tubes from outside.

A gas-heated reformer (GHR), for example, is commonly used as the primary reformer in combination with a secondary reformer; the hot gases leaving the secondary reformer are fed in the shell side of the GHR and supply the reforming heat. Hence, the GHR is basically a tubular gas-gas heat exchanger.

EP-A-2022754 discloses a front-end of an ammonia plant, for producing ammonia synthesis gas, with a primary reformer comprising externally heated tubes filled with a catalyst.

The conventional tube heat exchangers or tube reformers have some limitations and drawbacks.

A drawback of catalytic reformers with tubes filled of catalyst is that the change of exhausted catalyst is time-consuming and expensive. Moreover, the traditional catalyst shapes used to fill steam reforming tubes (e.g. n-hole cylinders) are prone to crushing. Therefore pressure drop tends to increase in the long run. Another drawback is that conventional tube vessels are highly exposed to metal dusting, especially if they operate in a certain range of temperature. In addition, there are an incentive and a continuous effort to decrease the temperature approach between the two sides of the tubes, in order to reduce wasted heat.

Another drawback is that a conventional design of a tube vessels is not suitable for use of non-metal tubes, for example ceramic tubes. Ceramic tubes are attractive due to superior resistance of ceramic materials to high temperatures, compared to metal or steel tubes, and because they do not suffer metal dusting. However, the design of a ceramic-tube vessel would introduce some technical problems. First, the ceramic tubes cannot be welded to metal parts such as tube sheets. Techniques for ceramic to metal bonding are known in the art but they introduce relevant complexity and costs and/or they are not applicable to reformers. Moreover, ceramic tubes integral with the tube sheets and/or the pressure vessel would suffer stresses induced by different thermal expansion of metal and ceramic. For the above reasons, reformers with ceramic tubes have found so far little or no application in practice, despite their attractive potential.

### Summary of the invention

The problem underlying the invention is to provide a novel structure for a pressure vessel, in particular for a tube reformer, allowing the overcome of the above drawbacks. The proposed design involves tubes which are simply supported by tube sheets, that is with no fixed joint between the tubes and the tube sheets or other metal parts of the vessel.

Accordingly, the problem is solved with a pressure vessel comprising a shell, a first tube sheet, a second tube sheet and a plurality of tubes arranged inside said pressure vessel to form a tube bundle between the first tube sheet and the second tube sheet, the reformer being **characterized in that** each tube has a first end with simply supported link relative to the first tube sheet, and a second end with a simply supported link relative to the second tube sheet.

According to the invention, the tubes are not welded, screwed or firmly fixed in another way to the tube sheets. The tubes share simply supported links with the tube sheets. As apparent to a skilled person, a virtual displacement of tubes relative to the tube sheets is then possible. Preferably, each link between the first (or second) end of a tube and the first (or second) tube sheet leaves the tube virtually free to rotate around its longitudinal axis and to move in a direction parallel to said axis. It has to be noted that, due to the simply supported links, each tube is singularly extractable from the vessel.

In a preferred embodiment, simply supported links are formed by suitable receptacles of the tube sheets and by end portions of said tubes which are shaped so as to match said receptacles. The receptacles of the first tube sheet and second tube sheet can be the same or different, as well as the opposite first and second ends of the tubes. More generally, the links between the tube ends and the tube sheets can be identical or may differ between the first and second tube sheet.

The following are non-limitative examples of simply supported links adapted to carry out the invention.

The receptacles of a tube sheet or of both tube sheets may have the form of passing through holes or grooves, and the end portions of tubes can be designed accordingly, in order to be insertable in said holes or grooves with a sliding fit.

In a first embodiment, the end portions of a tube have a reduced diameter compared to the rest of the tube, and said reduced diameter matches the diameter of holes of the tube sheet with a small clearance, in such a way that the end portion of the tube can be fitted in a hole of the tube sheet. An annular surface is formed at the transition between the end portion of the tube, with a reduced diameter, and the rest of the tube with nominal diameter. Said annular surface rests on the surface of the tube sheet around the insertion hole, thus providing the desired simple support.

According to a second embodiment, the holes of a tube sheet have a diameter substantially greater than the diameter of respective tube ends, and the coupling between a tube and the tube sheet comprises a sealing element. A preferred form for a sealing element is an annular sealing cap which is insertable in the hole of the tube sheet and has an inner passage matching the diameter of the tube end with a sliding fit.

Said second embodiment is suitable, in particular, for connection of upper ends of tubes to a fixed upper tube sheet, in a pressure vessel with a partial opening. In fact, the larger holes of the tube sheet provide easy insertion and extraction of tubes through the partial opening, and once a tube is positioned, the assembly can be completed with the sealing element.

Other embodiments include for example: tapered tube ends that can be fitted into tapered sockets of the tube sheets; conical or spherical joints, or equivalent.

In the preferred embodiments of the invention, the fitting between a tube sheet and tube ends is made without gaskets. The sliding fit between a tube end and a hole of the tube sheet, or passage of a sealing cap, can be a precise fitting with a small clearance, allowing for very low or negligible leakage even in absence of a gasket. The term of small clearance means for example that a tube and a corresponding hole in the tube sheet have the same nominal diameter, with a tolerance allowing that the actual diameter of the tube is slightly less than the diameter of the hole. The option of a gasket however is not ruled out by the invention.

Said embodiments are applicable also to non-metallic tubes. For example, ceramic tubes can be manufactured with a noticeable precision and then they are available with small dimensional tolerances.

According to another aspect of the invention, the tubes have a modular structure, that is each tube comprises several tube portions. The joints between tubes can be realized according to per se known technique including for example spigot and socket joints, bell end joints or the like. Also the joints between the tube portions realize a simple support, in a preferred embodiment. Hence for example a vertical reformer according to an embodiment of the invention comprises modular vertical tubes made of stacked portions, wherein a lowermost tube portion rests on a fixed lower tube sheet of the reformer, and other tube portions simply rest on an underlying tube portion. Modular tubes can be preferred when the tubes are relatively long and/or when only a partial opening is available, for an easier introduction or extraction of tubes into/from the pressure vessel.

According to the various embodiments of the invention, both tube sheets can be fixed to the pressure vessel, or one tube sheet can be floating inside the pressure vessel. Embodiments with a floating tube sheet have preferably at least one full opening which allows removal, when necessary, of the floating sheet.

In a vertical pressure vessel, at least the lower tube sheet is preferably fixed to the pressure vessel, so that any vertical load on the tubes is borne by the fixed tube sheet. The upper sheet then can be fixed or floating.

One of the preferred embodiments is a vertical pressure vessel with a fixed lower tube sheet and a floating upper tube sheet. The lower ends of the tubes are simply supported by the lower tube sheet, whilst the floating tube sheet rests on the upper ends of the tubes. In other words, the upper tube sheet is simply supported by the tubes and is guided by the inner surface of the pressure vessel. Hence the tubes and the floating sheet form a self-sustained structure.

Preferably the outer diameter of said floating tube sheet is slightly smaller than the inner diameter of the pressure vessel, so that the floating tube sheet is precisely guided by the pressure vessel. A sealing means between the floating tube sheet and the inner wall of the pressure vessel can be provided, if appropriate.

A full opening flange has the advantage of full access to the tubes and possibility to remove the tubes or even the whole tube bundle with a simple extraction. In order to avoid the additional cost of a full opening, a pressure vessel with partial openings might be preferred, however. In such a case, both the tube sheets are preferably integral with the pressure vessel. In order to allow insertion/extraction of tubes through the partial opening, a modular tubes and/or a fitting with an additional sealing element, as the above mentioned sealing caps, could be advantageous.

According to another aspect of the invention, at least a portion of the inner and/or outer surface of the tubes is catalytically active. Accordingly, the reforming catalyst can be provided in the form of a coating layer or impregnation of an inner surface or outer surface of the tubes.

In the more common embodiments of the invention, the gas to be reformed is fed to the tube side and hence the reforming catalyst is provided as a coating layer or impregnation of a surface inside the tubes. Said surface can be the inner cylindrical surface of the tubes or a surface specifically provided inside tubes as a catalyst carrier. The tubes can be equipped with means to increase the available surface for supporting the catalyst. The following are examples of applicable means: in a first embodiment, said means comprise a helical support inserted in the tubes and coated with the catalyst; in a second embodiment, said means comprise internal longitudinal fins.

Both sides of tubes (inside and outside) can be catalytically active if appropriate. The inner catalyst and outer catalyst can be the same or different. According to different embodiments, a portion of the inner surface, or the whole inner surface, can be catalytically active. Similarly, a portion of the outer surface, or the whole outer surface, can be catalytically active. In embodiments where only a portion of inner or outer surface of tubes is catalytically active, the remaining surface will act as a heat exchanger.

Tubes with a catalytically active inner surface have the advantage of a more effective use of the catalyst, because diffusional limitations of the prior art catalyst-filled tubes are overcome. Hence, a much less quantity of catalyst is sufficient. Another advantage is that the tube side heat transfer is more efficient, since the catalyst is in direct contact with the tube inner surface, so that the conventional tube-to-gas and gas-to-catalyst heat transfer steps are removed.

This problem is eliminated with the invention. Another advantage is that catalyst can be replaced by re-tubing the reformer. This can be done by replacing tubes with an exhausted catalyst layer with new or regenerate tubes.

When both the inner and outer surfaces of tubes are catalytically active, a reformer according to the invention is able to carry out a catalytic reaction in both the tube side and shell side.

In the embodiments with ceramic tubes, the term of ceramic material shall be understood as a technical ceramic material, including oxides, non-oxides or composite ceramics. An example of applicable ceramic material is SiC (silicon carbide). Preferably, the tubes are made of a material with a high thermal conductivity. Hence, for example, ceramic materials with a high thermal conductivity will be preferred. In those embodiments of the invention which include tubes with catalytic surface(s), the tubes can be realized with a material adapted to offer a suitable substrate for catalyst washcoating or impregnation.

An aspect of the invention is also the revamping of a conventional apparatus such as a tube heat exchanger or tube reformer. For example a conventional tube reformer can be revamped by removing the original tube bundle, providing the necessary receptacles on the tube sheets, or installing new tube sheets if appropriate, and providing new tubes which will be simply supported by the tube sheets, according to the invention. New tubes are preferably of a ceramic material. The invention for example allows conversion of a conventional tube reformer into a ceramic-tube reformer.

The inventive vessel has the following main advantages:
- non-metal tubes, such as ceramic tubes, can be used;
- tubes can be easily extracted and replaced;
- the catalyst can be changed by means of re-tubing of the vessel.

A vessel according to the invention can use ceramic tubes without the problems of ceramic to metal bonding. The vessel will not suffer thermal stress, because the metal parts and the ceramic parts are free to follow their different thermal expansion. For example, in embodiments with a floating tube sheet, said floating sheet is free to move relative to the shell, following the thermal expansion of the ceramic tubes underneath. In the other embodiments, the tubes are generally free to elongate through the holes of the tube sheet or passages of the sealing caps.

Insertion or extraction of tubes is facilitated by the modular construction of tubes, where each module can easily pass through apertures of the pressure vessel.

It should be emphasized that the insertion of tubes does not require labour-intensive works inside the vessel like welding or positioning of gaskets. This is especially the case of a vertical reformer which is accessed from a top aperture, which may be a full or partial aperture. The tubes, or tube portions in case of modular tubes, can be inserted from the top aperture until they rest on the lower tube sheet. There is no need to access the lower tube sheet or to perform works in the bottom part of the vessel. The modular tubes are assembled by lowering and positioning, one after the other, the various tube portions, each portion simply resting on the underneath partially-assembled tube. Once the tube bundle is completed, the upper floating sheet is placed above the tubes or, according to the specific embodiment of the reformer, the sealing caps are placed around the top ends of the tubes.

Embodiments with catalyst-coated or impregnated tubes have the additional advantage that re-tubing of the reformer becomes an effective way for replacing exhausted catalyst. Tubes with exhausted catalyst can be removed to regenerate the catalyst layer and then re-inserted into the pressure vessel, or replaced with another set of tubes with a fresh catalyst layer. A reformer according to the invention could be shipped with two set of catalyst-coated tubes; once exhausted, the first set is removed and replaced with the second set; the first set of tubes can be sent to a regeneration process for a further use.

The possibility to remove the tubes and other internals in an easy way has also considerable advantages from the point of view of the maintenance.

Another important advantage is the ability to ensure a proper operation and no leakage, even without the need of seals between the tubes and the tube sheets, or between tube portions in the modular-tube embodiments. This is due to the small clearances allowed by ceramic tubes. Additionally, it has to be noted that in the field of reformers for hydrocarbons, which is of particular interest for this invention, the difference of pressure (delta-p) between the tube side and shell side is generally positive (i.e. pressure is greater inside tubes) and contributes to stability and tightness of the tube bundle, as will be explained more in detail with the examples.

These advantages will be more evident with the help of the following detailed description.

### Description of the figures

Fig. 1 is a scheme of a vertical tube reformer according to a first embodiment of the invention, with a floating upper tube sheet.
Figs. 2 and 3 are details of Fig. 1 showing the links between the tubes and the upper and lower tube sheet, respectively.
Fig. 4 is a detail of Fig. 1 showing the connection between two parts of a modular tube.
Figs. 5 is a scheme of the upper part of a vertical reformer according to a second embodiment of the invention.
Figs. 6 is a scheme of the upper part of a vertical reformer according to a third embodiment of the invention.

### Detailed description of a preferred embodiment

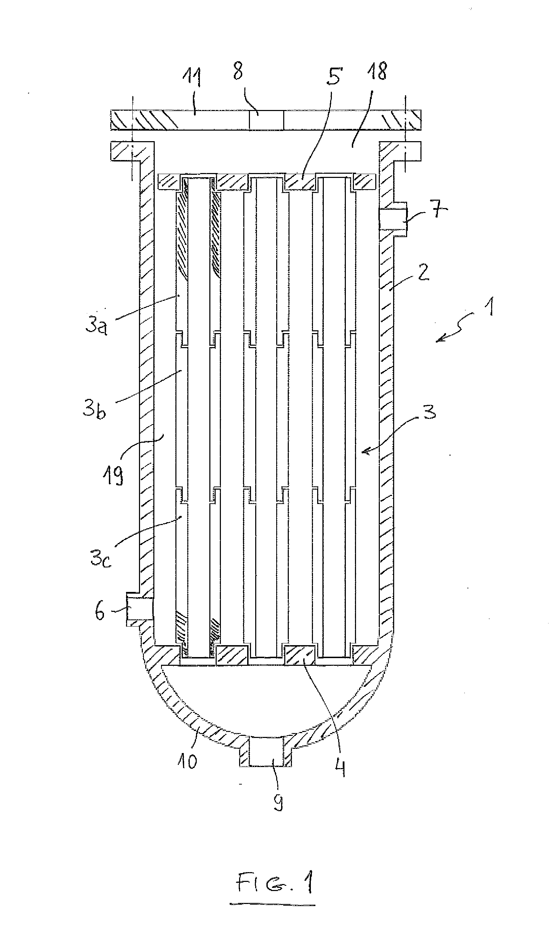

Referring to Fig. 1, a pressure vessel according to the invention is a gas-heated reformer 1 including a shell 2 and a bundle of tubes 3 extending between a lower tube sheet 4 and an upper tube sheet 5. The reformer 1 hence has a shell side with an inlet 6 and outlet 7 and a tube side with inlet 8 and outlet 9. The shell 2 has a bottom closure 10 and a top flange 11 which in this example provides a full opening.

The lower tube sheet 4 is integral with the shell of the vessel while the upper sheet 5 is floating.

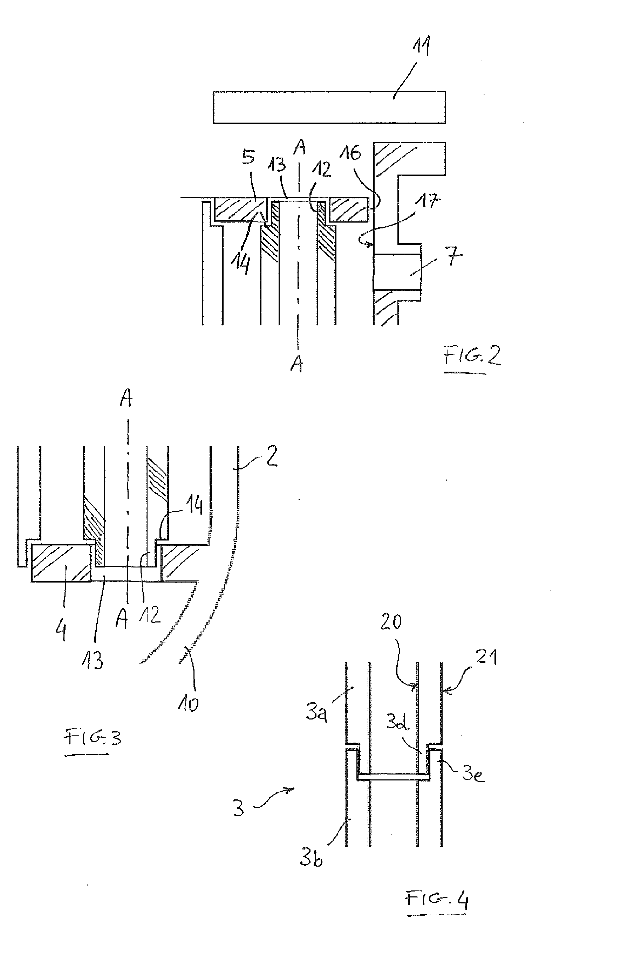

The opposite ends of tubes 3 are received in receptacles of the tube sheets 4, 5 forming a number of simply-supported links. As seen in Fig. 2 and Fig. 3, each tube 3 terminates with connection portions 12. Diameter of said connection portions 12 is smaller than the nominal diameter of the tubes, so that each tube has an annular surface 14. The figures show opposite portions 12 which are identical, but different end portions could be provided at the opposite ends of tubes 3, if appropriate.

More in detail, a connection portion 12 at either the upper end or lower end of a tube 3 is received with a small but positive clearance in a hole or groove 13 of the tube sheet 4 or 5, respectively, until the annular surface 14 rests on the surface of the tube sheet. Hence, each tube 3 is virtually free to rotate around the main axis A-A and also to move parallel to said axis. In practice, the tubes 3 are kept in place by their weight, by the weight of the floating tube sheet 5, and by the working pressure; this can be appreciated from Fig. 1 and will be explained below with a greater detail.

The floating tube sheet 5 has an outer diameter which is slightly smaller than the inner diameter of the shell 2 of the vessel, so that the floating tube sheet 5 is precisely guided by the inner wall 17 of said shell 2. A sealing means can be provided if appropriate in the small clearance space 16 between the floating tube sheet 5 and said inner wall 17 (Fig. 2), but said sealing means is not essential. A packing seal can be used for this purpose.

It shall be understood that the lower ends of the tubes 3 are simply supported in the holes 13 of the lower tube sheet 4, and the upper tube sheet 5 rests on the opposite upper ends of the tubes, which means that the weight of the freely floating tube sheet 5 is supported by the bundle of tubes 3 and ultimately by the lower fixed sheet 4.

In some embodiments, the tubes are modular, that is each tube comprises several tube portions. For example, portions 3a, 3b and 3c of a generic tube 3 are depicted in Fig. 1. A joint between two portions of a modular tube is shown in a greater detail in Fig. 4. Each tube portion has a male termination 3d that can be received in a female termination 3e of the adjoining tube portion. Also this coupling is removable and provides a simple support, which means that a tube portion rests on the underlying tube portion and can be simply lifted and removed from the rest of the modular tube. For example in Fig. 4 the tube portion 3a rests on the underlying portion 3b.

The top module 3a, according to Fig. 1, has a double male termination to engage the tube portion 3b and the receptacle 13 of the tube sheet 5. The male terminations 3d preferably have the same diameter of the end 12, which means that a generic module 3c with a male and female termination can be coupled with the lower flange 4.

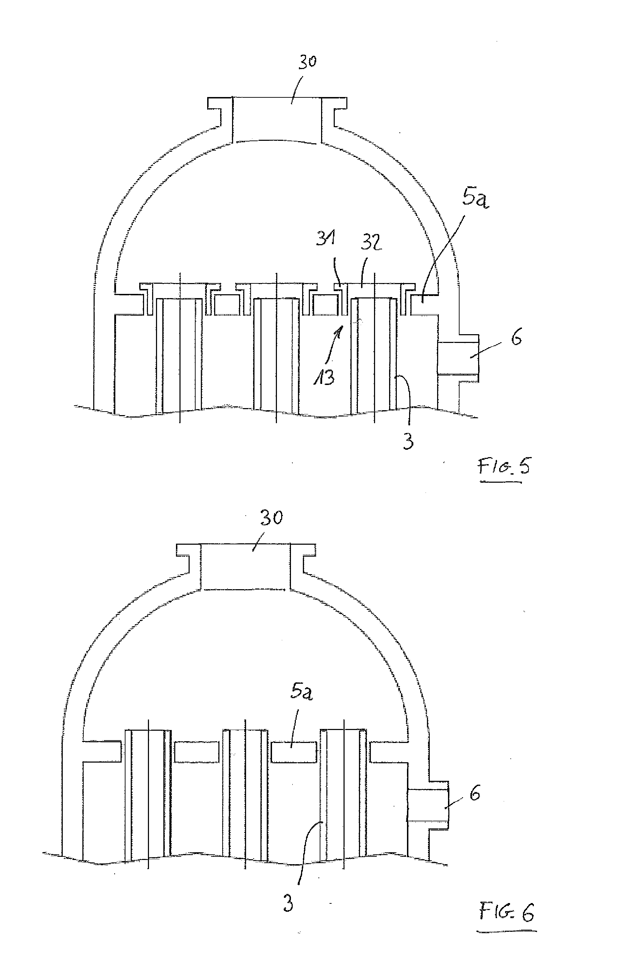

Figs 5 and 6 disclose two exemplificative embodiments where the pressure vessel has a partial opening 30 and the upper tube sheet, now indicated with 5a, is integral with the pressure vessel instead of floating.

In Fig. 5, the holes 13 of the tube sheet 5a are larger than the tubes 3 and each tube 3 is coupled to the tube sheet with a sealing cap 31 having a passage 32 for the tube 3. The outer diameter of the cap 31 matches the hole 13 of the tube sheet 5a, while the diameter of the passage 32 matches the diameter of the tube or diameter of the end thereof. The sealing cap 31 hence acts like an adaptor between the tube and the larger hole 13, ensuring a precise sliding fitting and sufficient fluid-tight sealing. In the simplified embodiment of Fig. 6, the tubes 3 and the holes 13 have the same nominal diameter and the sealing is given by the small clearance.

Figs. 5 and 6 relate to the upper end of tubes. The lower end of tubes can fit in the lower flange according to Fig. 3.

Sealing means or gaskets can be provided between the portions of tubes and/or at the interfaces with the sheets 4, 5, but they are not essential. In other embodiments the end of tubes and holes of the tube sheets can be tapered, e.g. conical. The receptacles of the tube sheets, in other embodiments, can be made as grooves.

A sealing means with a foil or annular band as disclosed in EP 1249272 could be adopted in particular at the interface between the upper end of tubes and the upper tube sheet 5a, for example as a further variant of the embodiment of Fig. 6. Removal of said sealing means will allow an easier extraction of tubes.

In a preferred embodiment, the catalyst for the reaction of reforming is provided in the form of a coating layer of the tubes. Referring to Fig. 4, each tube 3 has an inner catalyst coating layer 20. The coating layer may be deposited on the inner surface of the tube or on suitable carrier surface such as a helical support inside tubes (not shown).

The Fig. 4 also shows an outer catalyst layer 21 which enables the shell side of the reformer to provide further reforming of hot gas fed via the inlet 6.

An example of operation is as follows (Fig. 1). A gas feed to be reformed enter the reformer 1 via the gas inlet 8 and is distributed in the tubes 3, where it is contacted with the reforming catalyst of layer 20. A reformed gas product leaves the reformer 1 via the bottom outlet 9. Said gas to be reformed is for example a hydrocarbon source such as synthesis gas or natural gas and the gas product contains hydrogen and carbon monoxide. A heating medium such as a hot gas flows in the shell side 19 of the vessel, from inlet 6 to outlet 7.

In use, the pressure in the tube side generally overcomes the pressure in the shell side, namely the pressure in the tube-side region 18 over the top sheet 5 is greater than the pressure in the shell-side region 19. This commonly happens, for example, when the reformer 1 is a reformer of an ammonia plant. As a consequence, the pressure forces the top flange 5 downwards, concurring with the weight force to keep the packed structure of the whole tube bundle, and also helping the seal at the interfaces between tube portions 3a - 3b and 3b - 3c, and interfaces with the tube sheets.

The tubes 3 can be easily removed from and introduced into the reformer 1. In a full-open embodiment as in Fig. 1, the floating sheet 5 and then the tubes 3 can be removed and reintroduced through the top passage, after removing the top flange 11.

In a partial-opening embodiment like in Fig. 5 or Fig. 6 the tubes 3 or, as the case may be, the tube portions 3a, 3b, etc., can be extracted through the holes of the tube sheet and the top aperture, possibly after removal of the sealing caps 31. Insertion of a new tube, in the same way, is made by passing the first tube portion 3c through the passages 30 and holes 13, until it reaches the bottom sheet 4; then the subsequent modules are placed, until the tube is completed with the top module 3a; the same is repeated for all tubes and finally the caps 31 (if provided) are placed again to seal tube side from the shell side.

In the embodiments of Figs. 5 or 6, each tube section is dimensioned so as to pass easily through the aperture 30. The embodiment of Fig. 6 is simpler because it does not require the sealing caps; the embodiment of Fig. 5 however leaves more space for the positioning of the tubes, thanks to the larger holes in the upper tube sheet. It should be noted that no special work (e.g. removing old gaskets or placing new gaskets, welded joints, etc.) is to be performed inside the vessel and, in particular, in the lower portion near the sheet 4.

An example of operation of the gas-heated reformer 1 is now described. A reformable gas feed, for example comprising natural gas and steam, is preheated and enters the tube side of the reformer 1. In the externally heated tubes 3, the feed gas is contacted with the catalyst layer 20. A reformed product leaving the reformer 1 enters an autothermal reformer and is converted into a hot product gas, which is fed to the shell side of reformer 1 and acts as the heating medium of tubes 3 and then as a heat source for preheating the gas feed. In embodiments with double-coated tubes, i.e. tubes with catalyst layers 20, 21 as shown in Fig. 4, the shell side of the reformer can substantially operate as the ATR, which means that the reformer 1 is all-in-one reactor. The reformed product leaving the tube side of the reformer is partially combusted in a burner and the product gas leaving the burner is further oxidized in the catalytically active shell side of the reformer 1.

## Claims

1. A vessel suitable for use as a tube heat exchanger or reformer, comprising a shell (2), a first tube sheet (4), a second tube sheet (5) and a plurality of tubes (3) arranged inside the vessel to form a tube bundle between the first tube sheet and the second tube sheet, **characterized in that**: each of said tubes has a first end with a simply supported link (12, 13) relative to said first tube sheet, and a second end with a simply supported link (12, 13) relative to said second tube sheet.

2. A vessel according to claim 1, wherein the simply supported links between the ends of tubes (3) and the tube sheets (4, 5) leaves each tube (3) virtually free to rotate around its longitudinal axis (A-A) and to move in a direction parallel to said axis.

3. A vessel according to claim 1 or 2, **characterized in that** the simply supported links between ends of tubes (3) and a respective tube sheet (4, 5) are formed by receptacles (13) of the tube sheets and by end portions (12) of said tubes (3) which are shaped so as to match said receptacles of the tube sheet.

4. A vessel according to claim 3, said receptacles of the tube sheet being formed as passing through holes (13) or grooves, and the end portions of tubes (3) being insertable in said holes (13) with a sliding fit.

5. A vessel according to claim 4, the end portions (12) of the tubes (3) having a reduced diameter compared to the nominal diameter of the tubes, and said reduced diameter matching the diameter of the holes (13) of the tube sheet with a small clearance, in such a way that the end portion (12) of a tube (3) is insertable in the hole (13) of the tube sheet with a sliding fit, and an annular surface (14) formed at the transition between the end portion (12) and the main body of the tube (3) rests on the surface of the tube sheet around said hole, thus providing a simple supported link between the tube (3) and the tube sheet (4, 5).

6. A vessel according to claim 4, **characterized in that** the holes (13) of the tube sheet have a diameter substantially greater than the diameter of tube ends, and the link between a tube (3) and the tube sheet (4, 5) comprises an annular sealing cap (31) which has an outer diameter substantially matching the diameter of the hole (13) of the tube sheet, and has an inner passage (32) substantially matching the diameter of the tube end.

7. A vessel according to any of the previous claims, **characterized in that** one tube sheet (4) is fixed to the shell of the pressure vessel, and the other tube sheet (5) is floating inside the pressure vessel.

8. A vessel according to any of the previous claims, having a vertical pressure vessel (2) with a fixed lower tube sheet (4) wherein the lower ends of the tubes (3) are simply supported by the lower tube sheet, so that a vertical load on the tubes is borne by said fixed lower tube sheet (4).

9. A vessel according to claim 8, having a floating upper tube sheet (5), which rests on the upper ends of the tubes, the upper tube sheet (5) being vertically supported by the tubes (3) and being guided by the inner surface (17) of the pressure vessel (2).

10. A vessel according to claim 8, comprising an upper tube sheet (5a) which is also integral with the pressure vessel (2), and where the upper end of the tubes (3) are inserted in passing-through holes (13) of said tube sheet (5a).

11. A vessel according to any of the previous claims, **characterized in that** the tubes (3) have a modular structure, each tube comprising several tube portions (3a - 3c).

12. A vessel according to claim 11, comprising vertical tubes (3) with a simply supported link between the tube portions, wherein a lowermost tube portion (3c) rests on a lower tube sheet (4) of the reformer, and each tube portion (3a, 3b) simply rests on an underlying tube portion.

13. A vessel according to any of the previous claims, said tubes (3) being made of a non-metallic material.

14. A vessel according to claim 13, said tubes (3) being made of a technical ceramic material.

15. A vessel according to any of the previous claims, **characterized in that** the tubes have at least a portion of inner surface and/or at least a portion of outer surface which is catalytically active.

16. A vessel according to claim 15, **characterized in that** the catalytically active surface is provided in the form of a coating layer (20, 21) or impregnation of at least a portion of inner surface and/or of at least a portion of outer surface of the tubes (3).

17. A vessel according to claim 15 or 16, **characterized in that** the reforming catalyst is provided as a coating layer or impregnation of a surface inside the tubes, and the tubes are equipped with means to extend the support surface for the catalyst, preferably in the form of a helical support inserted in the tubes and coated with the catalyst or longitudinal fins.

18. A vessel according to any of the previous claims, the vessel being a gas-heated reformer for reforming of a hydrocarbon.

19. A method for revamping a pressure vessel comprising a first tube sheet, a second tube sheet and a bundle of metal tubes extending between said tube sheets, the method comprising the following steps: the original metal tubes are removed; the tube sheets are modified by provision of a number of receptacles (13) adapted to receive new tubes, or new tube sheets are installed which include said receptacles; new tubes are installed in the pressure vessel, said new tubes being made preferably of a ceramic material, and received in the receptacles of the modified or newly-installed tube sheets in such a way that a simply supported link is realized between the ends (12) of tubes and respectively the first tube sheet or second tube sheet (4, 5).
